# EUROPEAN PATENT SPECIFICATION

(11) **EP 3 277 216 B1**
(45) Date of publication and mention of the grant of the patent: **06.07.2022**
(21) Application number: 16723184.4
(22) Date of filing: 23.03.2016
(51) Int. Cl.: A61C 5/70, A61C 5/77, A61C 8/00, A61C 13/277

(54) **DENTAL PROSTHESIS WITH CAP**
DENTALE PROTHESE MIT KAPPE
PROTHÈSE DENTAIRE AVEC COIFFE

(30) Priority: 30.03.2015 IT FI20150095
(43) Date of publication of application: 07.02.2018
(73) Proprietor: Leone S.p.A., 50019 Sesto Fiorentino (Firenze) (IT)
(72) Inventor: SCOMMEGNA, Gabriele, 1-50029 Tavarnuzze Impruneta (Fl) (IT); DOLFI , Maurizio, 1-50143 Firenze (IT)
(74) Representative: Mincone, Antimo
(86) International application number: PCT/IT2016/000075
(87) International publication number: WO 2016/157231

(56) References cited:
- EP-A2- 2 489 326
- US-A- 4 756 689
- US-A- 5 413 480
- US-A1- 2013 244 207
- US-A1- 2014 162 211

## Description

The present invention is as defined in claims 1 and 3 and relates to a system comprising a removable prosthesis and a cap, and a process for the production of a removable prosthesis.

The cap is particularly used in the so-called "overdenture" system, which consists of a removable dental prosthesis anchored to artificial implants each constituted by an artificial root and a correspondent abutment.

The root is implanted in the maxillary bone or in the mandible bone, while the abutment is associated with the root by means of a conometric coupling or with other systems. The abutment is usually provided with a small ball, placed on its free (or outer) end, which constitutes the point of support on that the prosthesis will be anchored to the implant. The end of the abutment can also be differently shaped, and therefore it can be of non-spherical shape. Usually, for a total prosthesis, there are two implants for each dental arch and therefore are two the balls which allow the fixing of the prosthesis. For this reason, the prosthesis is provided with a pair of caps fixedly inserted in its base to be worn on the balls and to define a stable fastening that still allows the detachment of the prosthesis for the cleaning of the same or for other reasons.

EP2489326A2 describes a connecting arrangement having an intermediate element arranged between the crown and implant post head or cap. The cylindrical lower portion of intermediate element has a screw thread which is screwed with the screw thread on the inner wall surface of crown. Each divided segment of the upper portion of intermediate element is slightly deflected elastically in radial direction and is provided with a latching element which cooperates with the detent element of the implant post head, at the radial inner side.

US2014/162211A1 describes a hybrid, detachable dental attachment device comprising a cap for securing a dental appliance, a ring, and an abutment to attachment to a tooth root or implant.

US2013/244207A1 describes a mold for producing a coping used in a dental implant which includes a male component having a protrusion and a female screw forming part.

US 5 413 480 A discloses a prosthesis with a cap for removably fastening the dental prosthesis on a dental implant.

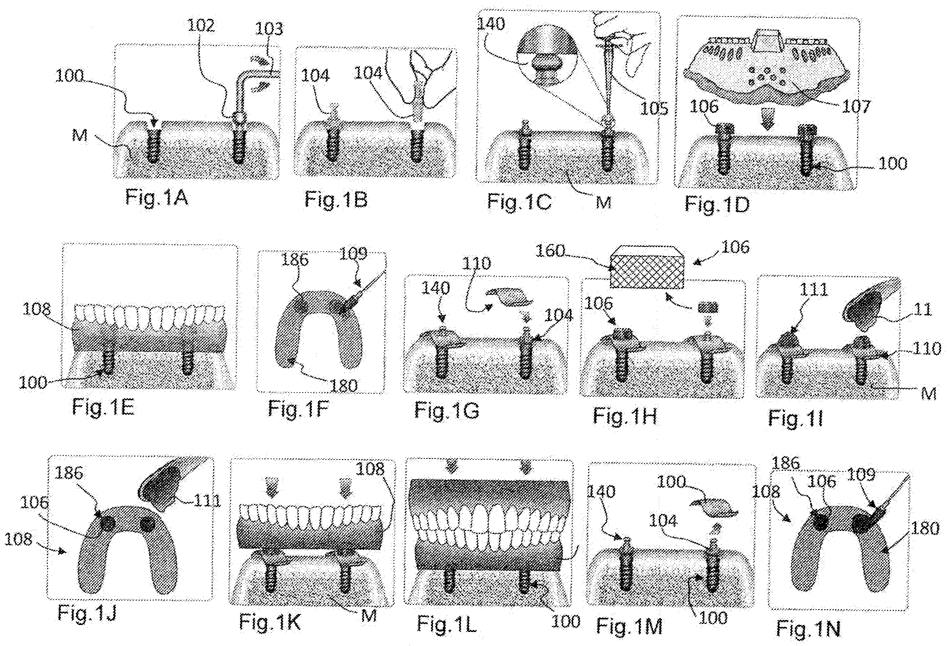

Figs.1A to 1N schematically illustrate a known procedure for the production of a dental prosthesis of the type "overdenture O-ring".

With reference to Fig.1A, once the implant (100) has been inserted into the maxillary bone or in the mandible bone (M) and the healing of the soft tissues has been reached, the so-called healing plugs are removed (102) with a suitable tool (103), as shown in Fig.1A. Then, the abutments (104) (see Fig.1B) for the overdenture O-ring system are been chosen according to the available height of the gingiva and the inclination of the implants. According to the procedural operations, the abutment (104) has to emerge from the gum for at least 1 mm to avoid that subsequently the caps compress the soft tissues. After having washed and dried thoroughly the internal of the implant, the insertion of the abutment for overdenture O-ring (104) in the system (101) is performed, with the application of an impulsive force along the longitudinal axis, for example by means of a striker element (105), as shown in Fig.1C.

Subsequently (Fig.1D) the caps (106) are placed on the abutments (104) and the dental imprint was taken by means of a spoon (107) for imprints of known type. In this way, the final prosthesis will be provided with suitable seats for the caps (106). The caps (106) are then removed. When the prosthesis (108) is ready, the same is placed in the mouth for a general control, in particular to verify the space destined to the housing of the caps (106), as shown in Fig.IE. Then, the prosthesis (108) is subjected to a milling, in particular on its base (180), in correspondence of the seats (186) intended to receive the caps (106) in order to obtain a corrected mucous support of the prosthesis without friction. In fig.1F with (109) is indicated a milling device used for this purpose. When a successful stabilization is achieved, (see Fig.1G) a separator formed with a portion of a dental dam (110) is placed in correspondence of each abutment (104) to prevent the soft tissue to come in contact with the acrylic. Fig.1H shows the next stage, which requires the insertion of the caps (106) on the abutments (104) and Fig.1I shows the subsequent phase that foresees the casting of acrylic (111) on the caps (106). The acrylic (111) is then inserted (see Fig.1J) in the seats (186) for the caps (106) formed in the prosthesis (108), which is then applied in the patient's mouth over the abutments (Fig.1K) . Subsequently, the mouth of the patient has been closed in the proper occlusal position, as shown in Fig.1L. At the end of the polymerization process of the acrylic, the prosthesis (108) is removed from the patient's mouth. The caps (106), thanks to their particularly retentive surface (160), visible in the enlarged detail of Fig.1H, remain inside of the prosthesis (108) integrally associated to the same. The dams (110) are then removed from the abutments (104), as shown in Fig.1M. At the conclusion of the procedure, as shown in Fig. 1N, the excess of acrylic is removed until the total uncovering of the lower edge of the cap (106). A drawback of the prosthesis of known type lies in the impossibility of replacement of the caps. The replacement may be required for the wearing of the material or for damages at the caps occurred during the realization of the prosthesis, for example during finishing. The inability to replace damaged or worn cap makes it impossible to properly use the prosthesis even if the damage concerns a very modest cost component as the cap.

Among the aims of the present invention there is to eliminate the aforesaid drawbacks of prior art.

This result is achieved, according to the present invention, by adopting the idea to realize a cap for the anchorage of a dental prosthesis and a dental prosthesis having the characteristics indicated in the independent claims. Other features of the present invention are object of the dependent claims.

Among the advantages of the present invention is the fact that, in case of need, it is possible to replace one or more caps mounted on the prosthesis; that the caps can easily be replaced by a simple screwing/unscrewing tool thanks to the internal shape of the cap; that the cap may be shaped to also allow the acceptance of an abutment having a frusto-conical head; that the cap is formed by a single body, so simplifying the manufacture of the cap and the realization of the proshtesis; that a prosthesis made in accordance with the present invention is robust and substantially maintains unchanged its characteristics compatibly with the normal conditions of use; that a process for the realization of the prosthesis according to the present invention is able to provide a prosthesis in which the caps are able to allow optimal coupling with the abutment and, at the same time, can be easily and efficiently separated from the prosthesis body; that the resources necessary to the implementation of the present invention are comparable, both in terms of time and cost, to those of a conventional prosthesis; furthermore, the formation of the prosthesis procedure involves only a few changes compared to conventional procedures, for which dental technicians are facilitated in learning the correct execution.

These and other advantages and features of the present invention will be best understood by anyone skilled in the art from the following description and with the help of the attached drawings given as a practical exemplification of the invention, but not to be considered in a limitative sense, wherein:
- Figs. 1A, 1B, 1C, 1D, 1E, 1F, 1G 1H, 1I, 1J, 1K, 1L, 1M, 1N schematically represent a known process for the production of a prosthesis of the type called overdenture O-ring;
- Fig.2 is a schematic side view with parts removed of a possible example of embodiment of a cap according to the invention, represented together with an abutment fixed to the artificial root of the corresponding dental implant and in which the prosthesis and the gingiva of patient are represented in a schematic way;

- Figs 3, 4 are schematic side views of an abutment, which in Fig. 3 is associated with a cap represented in transparency, while Fig. 4 is represented without the cap;
- Fig.5 is a plan view from below of the cap of Figs 2, 3;
- Fig.6 is a view according to a longitudinal section of the cap of Figs 2, 3, 5;
- Figs 7, 8 represent schematically some steps of a method for manufacturing a prosthesis according to the invention; and
- Fig. 9 shows partially a prosthesis according to the invention, in which is visible the threaded seat that is formed in it.

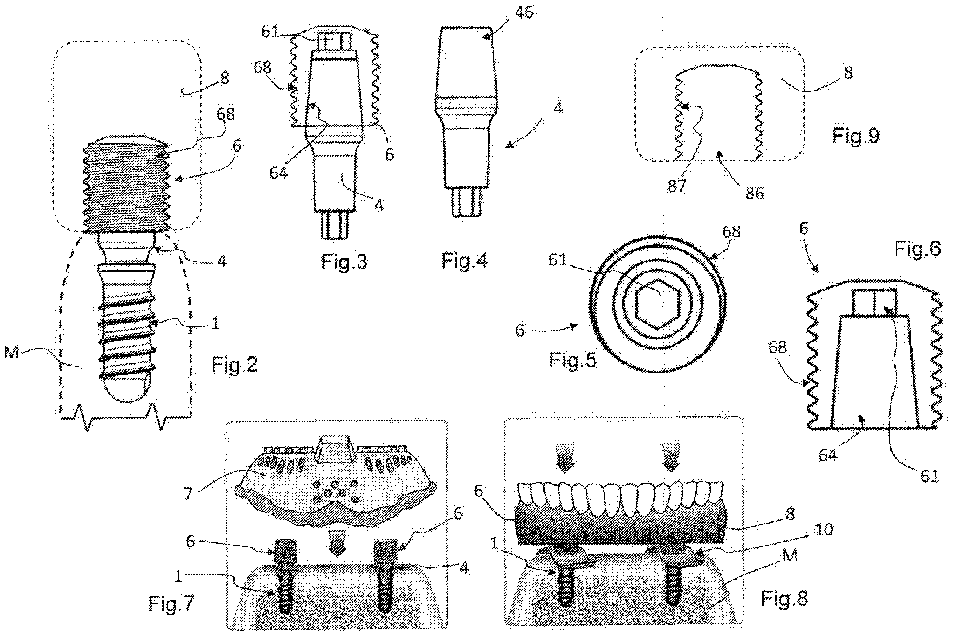

With reference to the drawings of Figg.2-9, a cap (6) in accordance with the present invention is used for making a removable prosthesis (8) anchored by means of two dental implants, each comprising an artificial root (1) and an abutment (4). The artificial root (1) is implanted in the mandible or maxilla (M) in a known manner and therefore not described.

The cap (6) is intended to be inserted into the prosthesis (8) for be fitted on the abutment (4) and it is adapted to define a stable but removable constraint which permits the detachment of the prosthesis from the abutments (4) when necessary. The cap (6) of the invention is provided with a threaded outer surface (68). This allows replacement of the cuff (6) in case of damage or for other requirements. The removal of the cap (6) from the prosthesis (8) is achievable thanks to an internal seat (61) of the cap, complementarily shaped with respect to a tool used to unscrew and tighten the same cap (6) from / into the prosthesis (8) to which it is associated. In the example shown in Figure 5 and Figure 6 said inner housing (61) has a hexagonal shape in plan to allow the insertion of a correspondingly shaped key. Obviously there are other possible conformations of the tool used, as well as the size and conformation of the cap (6).

The cap (6) is further provided with an internal cavity (64) adapted to receive a corresponding frusto-conical frustum portion (46) presented from the abutment (4) with which the cuff (6) is intended to couple. This allows to properly attach the cap (6) to the abutment (4) ensuring a remarkable stability of the prosthesis (8).

As shown in Fig.6, the aforementioned housing (61) is above the cavity (64) for coupling with the abutment (4).

The present invention also relates to a prosthesis provided with the cap (6) abovementioned. In particular, the prosthesis (8) is characterized by the fact of being provided with at least a cap (6) which can be fixed to the abutment (4) and which has a threaded outer surface (68) which is engaged in a correspondingly threaded seat (86) formed on the prosthesis (8). The prosthesis (8) is therefore provided with a female thread (87) in which the male screw (68) of the cap (6) can be screwed.

In practice, as described in the attached drawings, the cap (6) is constituted by a single body provided with a threaded outer surface (68) and an internal seat (61) shaped complementarily with respect to a tool used to unscrew and tighten the same cap (6) from / into the prosthesis (8) to which it is associated.

A prosthesis (8) according to the invention is therefore provided with a female thread (87) in which is screwed the male thread (68) of the cap (6).

The process for the construction of a removable prosthesis (8) according to the present invention is of the type usable for the formation of a conventional prosthesis, being essentially similar to the procedure described in Figs.1A-1N. The process of the invention (of whom two operating phases are schematically shown in Figs.7-8) is characterized in that it includes a step of inserting, in the base of the prosthesis (8), at least one cap (6) fixable to the abutment (4) and having a threaded outer surface (68), the insertion of said cap (6) determining the formation of a seat (86) correspondingly threaded into the prosthesis (8). In the drawings of Figs.7-8, the references 7 and 10 mark a spoon and a dam which correspond, respectively, to the spoon 107 and the dam 110 of the Figs.1A-N drawings.

More particularly, the process of the invention has the first steps that are similar to the procedure already described with reference to Figs.1A-1F. After these steps, a cap (6) is fitted on each abutment (4) as shown in Fig.3. Then, in the seats (86) so formed in the base of the prosthesis (8) is entered the acrylic resin and acrylic resin is put on each cap (6).

In practice, during the substantial embedding of the caps (6) in the prosthesis body (8), the threaded surface (68) determines the formation of a corresponding female thread (87) on the walls of the seat (86) which receives the same cap (6).

In a final step, after the polymerization of the resin, the procedure is similar to that described with reference to Fig. 1N.

The present invention therefore allows to provide a dental prosthesis in which the connection between cap (6) and intra-bone implant (1) is particularly effective, in particular when the union between the abutment (4) and cap (6) is of conometric type, guaranteeing the possibility of detachment of the cap (6) from the prosthesis (8) thanks to the screw connection between these two elements.

In the present description reference is made to at least one cap (6) but it is noted that the inventive concept is extended to a number of caps that can be equal to two, as expected generally in the most widespread form of embodiment of the dental prosthesis (8) anchored to two dental implants, or greater than two whereas the number of usable dental implants for anchoring the prosthesis is greater than two.

For realizing the invention can be used the materials normally used to make the dental prosthesis, implants and anchoring caps of the prosthesis to the implants. The invention is not limited to those described and illustrated, but can be widely modified with regard to the nature and arrangement of the materials used, without departure from the invention as claimed.

## Claims

1. System comprising a removable prosthesis and at least one cap, the prosthesis being of the type which can be anchored to one or more implants which consist of an artificial root (1) and an abutment (4), the removable prosthesis being connectable to the at least one cap (6) which can be reversibly fitted on said abutment (4), **characterized in that** said cap (6) has a threaded outer surface (68) adapted to engage a correspondingly threaded seat (86) in said prosthesis, wherein the formation of said correspondingly threaded seat (86) has been determined by the insertion of said cap into said prosthesis and **in that** said cap (6) is provided with an internal seat (61) complementarily shaped with respect to a tool used to unscrew and screw the same cap (6) from / into the prosthesis (8) to which it is associated.

2. System according to claim 1, **characterized in that** the cap (6) is provided with an internal frusto-conical cavity (64) adapted to receive a corresponding frusto-conical portion (46) presented from the abutment (4) with which the cap (6) is intended to couple.

3. Process for the production of a removable prosthesis of the type which can be anchored by one or more implants which consist of an artificial root (1) and an abutment (4), comprising, a step of insertion into said prosthesis (8) of at least a cap (6) fixed to said abutment (4) by putting acrylic resin on the cap and in a seat for the cap formed in a base of the prosthesis and applying the prosthesis (108), in the patient's mouth over the abutment, **characterized in that** said cap (6) has a threaded outer surface (68), the insertion of said cap (6) determining the formation of a correspondingly threaded seat (86) in said prosthesis (8) and **in that** said cap (6) is provided with an internal seat (61) complementarily shaped with respect to a tool useable to unscrew and screw the same cap (6) from / into the prosthesis (8) to which it is associated, wherein after a polymerisation of the acrylic resin, the prosthesis (108) and the cap, integrally associated to the prosthesis, is removed from the patient's mouth and excess of acrylic resin is removed until the total uncovering of the lower edge of the cap (106).

4. Process according to claim 3, **characterized in that** the cap (6) is provided with an internal frusto-conical cavity (64) adapted to receive a corresponding frusto-conical portion (46) presented from the abutment (4) with which the cap (6) is intended to couple.

## Patentansprüche

1. System, umfassend eine abnehmbare Prothese und mindestens eine Kappe, wobei die Prothese von dem Typ ist, der an einem oder mehreren Implantaten verankert werden kann, die aus einer künstlichen Wurzel (1) und einem Pfeiler (4) bestehen, wobei die abnehmbare Prothese mit der mindestens einen Kappe (6) verbunden werden kann, die reversibel auf den Pfeiler (4) aufgesetzt werden kann, **dadurch gekennzeichnet, dass** die Kappe (6) eine mit einem Gewinde versehene Außenfläche (68) aufweist, die angepasst ist, um einen entsprechenden Gewindesitz (86) in der Prothese in Eingriff zu bringen, wobei die Bildung des entsprechenden Gewindesitzes (86) durch das Einsetzen der Kappe in die Prothese bestimmt worden ist, und dass die Kappe (6) mit einem inneren Sitz (61) versehen ist, der komplementär zu einem Werkzeug geformt ist, das verwendet wird, um dieselbe Kappe (6) aus der / in die Prothese (8), mit der sie assoziiert ist, zu schrauben.

2. System nach Anspruch 1, **dadurch gekennzeichnet, dass** die Kappe (6) mit einem inneren kegelstumpfförmigen Hohlraum (64) versehen ist, der angepasst ist, um einen entsprechenden kegelstumpfförmigen Abschnitt (46) aufzunehmen, der von dem Pfeiler (4) präsentiert wird, mit dem die Kappe (6) gekoppelt werden soll.

3. Verfahren zur Herstellung einer abnehmbaren Prothese des Typs, der durch ein oder mehrere Implantate verankert werden kann, die aus einer künstlichen Wurzel (1) und einem Pfeiler (4) bestehen, umfassend einen Schritt eines Einsetzens mindestens einer Kappe (6) in die Prothese (8), die an dem Pfeiler (4) befestigt ist, indem Acrylharz auf die Kappe und in einen Sitz für die Kappe, der in einer Basis der Prothese gebildet ist, aufgebracht wird, und Anbringen der Prothese (108) in dem Mund des Patienten über dem Pfeiler, **dadurch gekennzeichnet, dass** die Kappe (6) eine mit einem Gewinde versehene Außenfläche (68) aufweist, das Einsetzen der Kappe (6) die Bildung eines entsprechenden Gewindesitzes (86) in der Prothese (8) bestimmt und dass die Kappe (6) mit einem inneren Sitz (61) versehen ist, der in Bezug auf ein Werkzeug komplementär geformt ist, das verwendet werden kann, um dieselbe Kappe (6) aus der / in die Prothese (8), mit der sie assoziiert ist, zu schrauben, wobei nach einer Polymerisation des Acrylharzes die Prothese (108) und die integral mit der Prothese assoziierte Kappe aus dem Mund des Patienten entfernt wird und ein Überschuss an Acrylharz bis zum vollständigen Freilegen des unteren Rands der Kappe entfernt wird (106).

4. Verfahren nach Anspruch 3, **dadurch gekennzeichnet, dass** die Kappe (6) mit einem inneren kegelstumpfförmigen Hohlraum (64) versehen ist, der angepasst ist, um einen entsprechenden kegelstumpfförmigen Abschnitt (46) aufzunehmen, der von dem Pfeiler (4) präsentiert wird, mit dem die Kappe (6) gekoppelt werden soll.

## Revendications

1. Système comprenant une prothèse amovible et au moins une coiffe, la prothèse étant du type qui peut être ancré à un ou plusieurs implants constitués d'une racine artificielle (1) et d'une butée (4), la prothèse amovible pouvant être reliée à ladite au au moins une coiffe (6) qui peut être ajustée de manière réversible sur ladite butée (4), **caractérisé en ce que** ladite coiffe (6) possède une surface externe filetée (68) adaptée à la mise en prise d'un siège fileté correspondant (86) dans ladite prothèse, la formation dudit siège fileté correspondant (86) ayant été déterminée par l'insertion de ladite coiffe dans ladite prothèse et **en ce que** ladite coiffe (6) est équipée d'un siège interne (61) de forme complémentaire par rapport à un outil utilisé pour dévisser et visser la même coiffe (6) de/dans la prothèse (8) à laquelle elle est associée.

2. Système selon la revendication 1, **caractérisé en ce que** la coiffe (6) est dotée d'une cavité tronconique interne (64) adaptée à la réception d'une partie tronconique correspondante (46) présentée à partir de la butée (4) à laquelle la coiffe (6) est censée se coupler.

3. Procédé de production d'une prothèse amovible du type qui peut être ancré par un ou plusieurs implants constitués d'une racine artificielle (1) et d'une butée (4), comprenant, une étape d'insertion dans ladite prothèse (8) d'au moins une coiffe (6) fixée à ladite butée (4) en mettant de la résine acrylique sur la coiffe et dans un siège pour la coiffe formé dans une base de la prothèse et en appliquant la prothèse (108) dans la bouche du patient sur la butée, **caractérisé en ce que** ladite coiffe (6) possède une surface externe filetée (68), l'insertion de ladite coiffe (6) déterminant la formation d'un siège fileté correspondant (86) dans ladite prothèse (8) et **en ce que** ladite coiffe (6) est équipée d'un siège interne (61) de forme complémentaire par rapport à un outil utilisable pour dévisser et visser la même coiffe (6) de/dans la prothèse (8) à laquelle elle est associée, après la polymérisation de la résine acrylique, ladite prothèse (108) et ladite coiffe, solidairement associées à la prothèse, étant retirées de la bouche du patient et l'excédent de résine acrylique étant retiré jusqu'au dévoilement total du bord inférieur de la coiffe (106).

4. Procédé selon la revendication 3, **caractérisé en ce que** la coiffe (6) est dotée d'une cavité tronconique interne (64) adaptée pour la réception d'une partie tronconique correspondante (46) présentée à partir de la butée (4) à laquelle la coiffe (6) est censée se coupler.
